(19) Europäisches Patentamt
European Patent Office
Office européen des brevets

(11) **EP 2 784 031 A1**

(12) **EUROPEAN PATENT APPLICATION**

(43) Date of publication:
**01.10.2014 Bulletin 2014/40**

(51) Int Cl.:
***C02F 9/00*** *(2006.01)*      ***C02F 1/32*** *(2006.01)*
***C02F 1/72*** *(2006.01)*      ***C02F 9/14*** *(2006.01)*

(21) Application number: **14161588.0**

(22) Date of filing: **25.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.03.2013 PT 10684913**

(71) Applicant: **Efacec Engenharia E Sistemas, S.A.**
**4471-907 Moreira-Maia (PT)**

(72) Inventors:
• **Saraiva, Isabel Maria Alexandre**
  **4450-587 Leça da Palmeira (PT)**
• **da Fonseca, Maria Amélia Ferreira**
  **4410-110 S. Félix da Marinha (PT)**
• **Vilar, Vitor Jorge Pais**
  **4520-610 São João de Ver (PT)**
• **Silva, Tânia Filomena Castro Valente**
  **4430-129 Vila Nova de Gaia (PT)**
• **Boaventura, Rui Alfredo da Rocha**
  **4480-673 Vila do Conde (PT)**

(74) Representative: **Ferreira, Maria Silvina**
**Clarke, Modet & Co.**
**Rua Castilho, 50-9°**
**1269-163 Lisboa (PT)**

Remarks:
A request for correction of 26.05.2014 has been filed pursuant to Rule 139 EPC. A decision on the request will be taken during the proceedings before the Examining Division (Guidelines for Examination in the EPO, A-V, 3.).

(54) **Method of treating leachate, phototreatment reactors and respective use**

(57)    The present invention discloses a method and an apparatus for the treatment of effluents containing recalcitrant or xenobiotic compounds preferably leachate and even phototreatment reactors and effluent treatment plants.

The method for the treatment of effluents with recalcitrant and/or xenobiotic compounds comprises the following sequential steps:

• subjecting the effluent to a first biological oxidation treatment in particular, to remove biodegradable material, alkalinity and reduced forms of nitrogen;

• coagulate the resulting effluent with a coagulant with iron salts and separate the clarified liquid;

• subjecting the clarified liquid to a photooxidation by the photo-Fenton reaction with the use of UV / VIS radiation in the presence of hydroxyl radicals, in which the source of UV / VIS radiation is artificial light or a combination of sunlight and artificial light.

**Description**

**Technical Field of the Invention**

The present invention discloses a method and an apparatus for treatment of effluents containing recalcitrant or xenobiotic compounds, preferably leachate and even phototreatment reactors and wastewater treatment plants.

**Background of the Invention**

The elimination of persistent organic compounds or of difficult biodegradability currently constitutes one of the major problems in wastewater treatment. These compounds come from different backgrounds: industrial processes, in particular textiles, pharmaceuticals, wine, cork, etc.; farming and household containing, in this case, pesticides, herbicides, fertilizers, detergents, and also coming from landfills by leachate. The demand for effective means, at an attractive cost, to remove these compounds is of general interest in order to meet the discharge standards and, fundamentally, to reduce the environmental impact and enable the reuse of water.

Every year in the European Union about 1.1 billion tonnes of waste are produced, of these, 250 million tons correspond to municipal waste (IRAR, 2008). Both at Community level and at national level, numerous efforts have been developed with the aim of promoting the reduction and reuse of waste, promoting the recycling and recovery under appropriate conditions, and only ultimately the secure confinement. Despite being the last option in the management hierarchy, a significant amount of solid waste (RSU) continues to have as a final destination the landfill.

In Portugal, during the year 2009, 5185 thousand tons of RSU (RASARP 2010) were produced. On average, in the period between 2004 and 2009, 10% of the residues were selectively collected, while the remaining 90% were collected indiscriminately, being mainly destined to the landfill (65%), followed by energy recovery (18%) and organic recovery (7%) (GRP 2010).

Waste disposal in landfills necessarily leads to the production of leachates.

The leachates may contain high concentrations of biodegradable and non-biodegradable organic matter, such as humic and fulvic substances, and also ammonia and organic nitrogen, toxic metals, chlorinated organic compounds and inorganic salts, and have acute and chronic toxicity (Levy and Santana 2004). Some authors (Junestedt and Oman, 2008) detected the presence of over 90 organic and organo-metallic compounds and 50 inorganic elements. The detected compounds include halogenated aliphatic compounds, benzene and alkylated benzenes, alkylated phenols and phenol, phthalate esters, chlorinated benzenes, dioxins, furans and polychlorinated biphenyls (PCB), pesticides, polycyclic aromatic compounds and toxic metals. Different chemical, biological and toxicological samples analyses were performed to 10 leachates from Danish landfills and the presence of 55 xenobiotic organic compounds and 18 types of pesticides was detected. The bioassays with bacteria and algae showed that non-volatile organic compounds were toxic, causing 50% inhibition of the tested organisms (Baun et al. 2004).

Taking into account the information known in the art, the pollution arising from the leachate from landfills can last several years.

According to the classification of leachate as a function of the age of the landfill, adapted from Renou et al. (2008), a leachate is classified as "new" when it comes from a recent landfill (under 5 years), and is characterized by an acid pH, a very high COD - Chemical Oxygen Demand - (more than 10 000 mg O2/L), and a BOD5/COD ratio higher than 0.3 (BOD5-Biochemical Oxygen Demand (5 days)), which indicates that it is moderately biodegradable. The leachates classified as "stabilized" (over 10 years) show a moderate organic pollutant load (less than 4000 mg O2/l COD) and a BOD5/COD ratio lower than 0.1, indicating a low biodegradability, wherein the major fraction of organic material consists of high molecular weight compounds, particularly humic substances (HS) (higher than 1000 mg CHS / L), which are refractory and difficult to biodegrade.

Table 1 shows typical values of the composition of landfill leachates.

**Table 1 -** Values of the Composition of leachates in lanfills (Levy and Cabeças, 2006).

| Parameters | Value Range | Typical values |
|---|---|---|
| pH | 5.3 - 8.5 | 6 |
| $BOD_5$ (mg $O_2$/l) | 500 - 5000 | 2000 |
| COD (mg $O_2$/ l) | 2000 - 45000 | 10000 |
| TOC (mg C/l) | 1300 - 20000 | 6000 |
| TSS (mg/l) | 200 - 1000 | 500 |

(continued)

| Parameters | Value Range | Typical values |
|---|---|---|
| Organic nitrogen (N mg/l) | 10 - 600 | 200 |
| Ammonium (mg $NH_4^+$/l) | 300 - 3000 | 1500 |
| Nitrates (mg $NO_3^-$/l) | 5 - 40 | 25 |
| Total phosphorus (mg P/l) | 1 - 70 | 30 |
| Orthophosphate (mg $PO_4^{3-}$/l) | 1 - 50 | 20 |
| Alkalinity (mg $CaCO_3$/l) | 1000 - 10000 | 3000 |
| Total hardness (mg $CaCO_3$/l) | 300 - 10000 | 3500 |
| Calcium (mg $Ca^{2+}$/l) | 200 - 3000 | 1000 |
| Magnesium (mg $Mg^{2+}$/l) | 50 - 1500 | 250 |
| Potassium (mg $K^+$/l) | 200 - 2000 | 300 |
| Sodium (mg $Na^+$/l) | 200 - 2000 | 500 |
| Chloride (mg $Cl^-$/l) | 100 - 3000 | 500 |
| Sulfate (mg $SO_4^{2-}$/l) | 100 - 1500 | 300 |
| Total iron (mg Fe / L) | 50 - 600 | 60 |

By the stated features, it appears that these effluents require treatment with high efficiencies before being discharged in the aqueous medium. Due to the large variability in the quantity and quality of the produced leachate, which is influenced by factors such as the composition of the mass of deposited waste, precipitation, the age of the landfill and the type of management and operation of the same, it is complicated to define a line of treatment that is effective in all situations. As a matter of fact, the treatment of this type of effluents is one of the current problems that is difficult to solve.

Treatment systems currently used for leachates are similar to traditional treatment methods used for urban wastewater, including biological, physical and chemical processes. These can be classified into 5 groups (Renou, Givaudan et al. 2008)

i) *leachate channeling* (combined treatment with domestic wastewater; recirculation in the landfill);
ii) biodegradation (aerobic and anoxic biological processes such as lagoons, activated sludge, trickling filters, etc.).;
iii) physical and chemical methods (flotation, coagulation / flocculation, chemical precipitation, adsorption, *stripping* of ammonia, chemical oxidation and ion exchange);
iv) membrane filtration (microfiltration, ultrafiltration, nanofiltration and reverse osmosis);
v) combination of the above different processes.

The problem of lack of alternatives in the removal of many recalcitrant organic contaminants has led to the use of reverse osmosis as the only possible option to end treatment of leachate. However, reverse osmosis has serious drawbacks, namely: high cost of the equipment, high energy consumption, rapid fouling of the membranes, to which chemical pretreatments that reduce their useful life are required; production of large volumes of sludge, which when are returned to the landfill generate an environmentally unsustainable situation in the long term.

The advanced oxidation processes (POA) have been regarded as one of the most efficient solutions, both on the economic front, both by analysing the life cycle and by the environmental impact in the treatment of liquid effluents with low biodegradability, as with stabilized landfill leachate.

The main disadvantages of the use of the POA arise from the high energy costs associated with the production of UV radiation and high consumption of reagents, namely the hydrogen peroxide.

Bearing in mind the current situation of Landfill Leachate Treatment Plants (LLTP), which results from the lack of efficient systems in operation, and a society where environmental issues are becoming increasingly pressing, it becomes imperative to *"upgrade"* the existing systems in order to prevent the degradation of the watercourses and the soil.

The document CN20121103824 describes a method of advanced treatment for landfill leachate with MBR *(Membrane Biological Reactor),* which yields a final effluent with good quality. It is stated that the amount of recalcitrant substances is effectively removed by coagulation with ferric polyaluminum chloride, followed by sedimentation and by the action of adsorption of the organic bentonite. However, in this case, recalcitrant pollutants are transferred from the liquid phase to the solid phase, and are not actually destroyed. The present invention provides, in turn, a treatment method that enables complete destruction of recalcitrant pollutants, either by converting them to biodegradable compounds, or their complete mineralization up to the point of obtaining carbon dioxide and water.

The document CN20121098469 relates to an advanced method of treatment and recycling for landfill leachate that has great complexity because it combines several steps: anaerobic treatment, aerobic treatment, ultrafiltration, nanofiltration and reverse osmosis.

The document WO2001028932 discloses a method for treatment of leachate that consists in evaporation. This method, besides being expensive, does not destroy all compounds that are difficult to degrade. The most persistent pollutants are only transferred to the gas and/or solid phase.

The document CN20121128804 describes a method of treatment for high concentrations of ammonia nitrogen in landfill leachates. However, the document discloses a very complex treatment process that combines steps such as milling, use of sieves, separation by magnetic field and precipitation. Moreover, it requires many reagents which are not readily available in the market, such as limonite, dibutyl phthalate and maleic anhydride.

**General Description of the Invention**

The present invention provides a solution that treats contaminated effluents with recalcitrant and / or xenobiotic compounds, preferably landfill leachates. While the other treatments known from the prior art do not eliminate recalcitrant compounds and even contribute to the clogging of the same in the environment, increasing the extent of this problem, this invention destroys in fact persistent pollutants, oxidizing them to biodegradable compounds or, ultimately, to carbon dioxide and water.

The present invention describes a multistage method for treating effluents contaminated with recalcitrant and/or xenobiotic compounds, preferably landfill leachate effluents; new reactors for the phototreatment and a treatment station which includes the set of solutions.

This invention destroys, effectively, all pollutants, including the most persistent.

Depending on the characteristics of the leachate, which will vary over time, this technology allows to make this adjustment, that is, if the leachate is "new" it will predominate the biological component of the treatment; if the leachate is "stabilized" the photocatalytic step will predominate.

In this context, the present invention fills a gap in terms of treatment of leachates from landfill systems and its main advantage is that it eliminates, in an effective manner, recalcitrant pollutants, leading to a substantial improvement in the quality of the final effluent of the ETAL and enabling compliance with the legal requirements, all at a cost compatible with the technologies currently available in the market.

The fact of allowing the possibility to carry out the treatment in the place where the leachates are produced, the simplicity in the construction and assembly, combined with a faster treatment, reduced reagent consumption, effective treatment of the effluent and an easy operation and maintenance of these systems are advantages of the present invention.

In environmental terms, the invention is based on the assumptions of meeting the increasingly demanding environmental standards and the reduction in energy consumption through the use of solar radiation.

The present invention can be installed in existing plants, because many of the managing entities of the landfills that have LLTP are seeking a solution for this problem.

One of the aspects of the present invention describes a method for the treatment of effluents with recalcitrant and/or xenobiotics compounds, preferably from landfill leachate comprising the following sequential steps:

- subjecting the effluent to a first biological oxidation treatment in particular to remove biodegradable material, alkalinity and reduced forms of nitrogen (ammonia and/or nitrite);
- coagulate the resulting effluent with a coagulant with salts of iron or aluminium, and separate the clarified liquid;
- subject the clarified liquid to a photo-oxidation by photo-Fenton reaction with the use of UV/VIS radiation in the presence of hydroxyl radicals.

In a preferred embodiment the artificial light or sunlight and artificial light as a source of UV/VIS is used. Better yields in the treatment of leachate in terms of reliability and consistency in quality of the final effluent are obtained when combining the radiation of artificial light and sunlight as a source of UV/VIS.

Even better yields are obtained in leaching treatment in terms of reliability and consistency in quality of the final effluent, when in a preferred embodiment the radiation source comprises artificial lighting lamps, iron lamps in particular, with an incidence between 300 - 400nm that is, in the UVA range.

Even better results are obtained when iron lamps having the following characteristics (Table 2) are used.

Table 2 - One embodiment of the iron lamps.

| Geometric characteristics | |
| --- | --- |
| Arc Length (EA) | 1000 mm |
| Total length (Lg) | 1125 ± 2 mm |
| Tube diameter (d) | 19.5 mm |
| **Electrical characteristics** | |
| Lamp power | 4500 W |
| Current intensity of the lamp | 4.3 A |
| **Physical characteristics of the lamp** | |
| Radiation flow UV-C (200-280nm) | 320 W |
| Radiation flow UV-B (280-315nm) | 230 W |
| Radiation flow UV-A (315-400nm) | 770 W |
| **General characteristics** | |
| Tube Material | quartz |
| Filament ("doping") | iron |
| Temperature of the tube min-max | 700 - 900° C |

In other preferred embodiments the treatment method of the effluents may further comprise the step of subjecting the effluent resulting from the photo oxidation to a second biological oxidation treatment.

In another preferred embodiment of the method of treatment of effluents ferric chloride can be used as a coagulant with iron salts. For even better results, sulphuric acid can also be added in the coagulation step with ferric chloride.

Other forms of preferred embodiments of the effluent treatment method may include adding hydrogen peroxide as the source of hydroxyl radicals.

In other preferred forms of embodiments, the effluent treatment method can further include a second biological treatment that may comprise aerobic/anoxic cycles alternately.

In other preferred embodiments, the method may further comprise treating the sludge resulting from the biological oxidation step, coagulation, photo-oxidation, and the second biological treatment.

In another preferred embodiment, the method includes a first treatment of biological oxidation that is a biological treatment of activated sludge or a sequential batch treatment.

In yet another preferred embodiment, the method may further comprise in the reaction of photo-Fenton the addition a photo-oxidation catalyst, preferably ferrous sulphate heptahydrate.

Another aspect of the present invention provides a tubular reactor for the phototreatment of effluents, preferably landfill leachates, comprising the following elements: at least one horizontally arranged tube for the passage of the effluent to be treated, wherein the tube comprises in its interior, preferably concentrically, a sleeve made of quartz where a lamp containing iron is inserted. This reactor is particularly suitable for the treatment of flow rates of effluent above 20 m3 per day.

In one embodiment of the tubular phototreatment reactor, this may comprise a plurality of tubes, preferably 2, 3, 4, 5, 10, 20, 30, .... n tubes.

In one embodiment, the tubular reactor of phototreatment may further comprise, attached to a first tank / reservoir for the effluent coagulation and reagent addition of the photo-reaction with stirring. The addition of reagents on the first deposit is made in a phased manner.

Another aspect of the present invention provides a reactor for the phototreatment of small effluent flows, preferably landfill leachates comprising the following elements:

- container for the treatment of the effluent to be treated with input and output stirring;
- quartz sleeves arranged uniformly inside the reactor that have iron-containing lamps with a spectrum in the UV-Vis region with preferably greater incidence in the UVA range, and a mixing system.

In other preferred embodiments, the reactor may further comprise the coupling with a composite parabolic solar collector (CPC), which in turn comprises:

- metallic reflectors, preferably made of aluminium, anodised aluminium or stainless steel;
- cylindrical borosilicate tubes distributed in parallel under the reflective surface, allowing the lighting of the fluid that circulates in the tube;
- and a recirculation pump that ensures a turbulent regime

In one embodiment, the reactors or treatment systems can effect the capture of solar radiation in the 300-560 nm range.

In one embodiment of the phototreatment reactors or treatment systems, the spectrum of the iron lamps varies between 300 - 400nm. Even better results are obtained when iron lamps with the characteristics of table 2 are entered into the reactors for effluent treatment.

In other preferred embodiments, the reactors or processing systems may further comprise the addition of reagents and/or systems for monitoring the photo-Fenton reaction, in particular: pH control system, control system of hydrogen peroxide, catalyst dispensing device, dosing pumps for reagents, UV radiometer, system to control the dissolved organic carbon, among others, in order to enable a better control of the reaction.

Another aspect of the present invention describes a treatment plant for effluents with recalcitrant and/or xenobiotic compounds, preferably landfill leachate, which comprises the following elements linked sequentially:

- device for biological oxidation of the effluent;
- device for the coagulation of the resulting effluent with a coagulant adder device with iron salts and also a step with the addition of the reagents of the photo-reaction;
- device of photo-oxidation of the photo-Fenton reaction with artificial UV/VIS radiation emitting device, with preferably a tubular and horizontal device and also, in some cases, with solar radiation.

In other preferred embodiments, the treatment plant may further comprise a biological treatment device after the photo-oxidation reactor. For even better results the treatment plant may comprise the described photo-treatment reactors comprising the described iron lamps.

The preferred embodiments described above are combinable.

## Description of the Figures

For an easier understanding of the invention figures are attached, which represent preferred embodiments of the invention that, however, are not intended to limit the object of the present invention.

Figure 1 shows a schematic illustration of a plant for treatment of leachate for small flow rates.

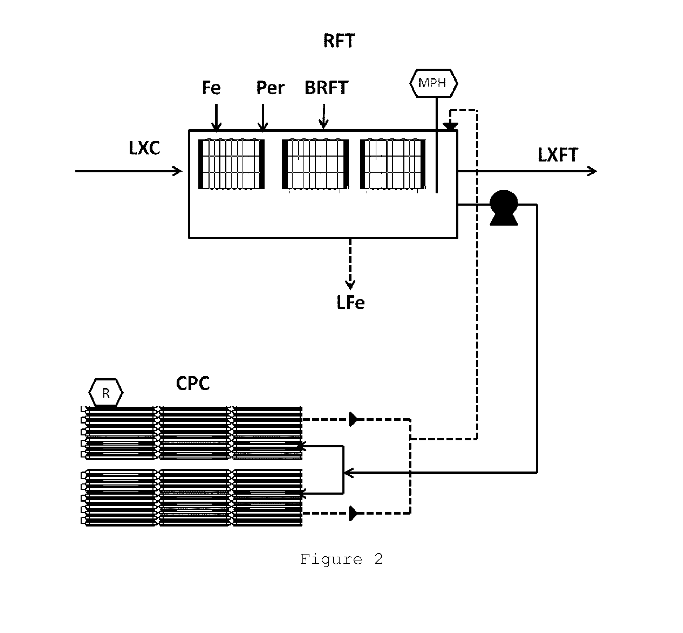

Figure 2 shows an embodiment of the plant of figure 1 in particular the detail of phototreatment.

Figure 3 shows a scheme of a plant for treatment of leachate for flow rates above 20 m3 per day.

Figure 4 shows an embodiment of the plant of figure 3 in particular the detail of phototreatment.

Wherein LXBru represents - raw leachate
TB1/TB2 represents - biological oxidation tank
LXB1 represents - effluent entering the TC / TC'
TC/TC' represents - coagulation tank
Coa represents - coagulant addition
HTC represents - addition of acid to the coagulation tank
LXC represents - stream leaving the coagulation tank and entering the phototreatment
Fe represents - addition of catalyst (with iron element)
Per represents - addition of hydrogen peroxide
BRFT represents - addition of base in the phototreatment
RFT represents - phototreatment reactor
LXFT represents - neutralized phototreated leachate
MET represents - addition of methanol
HTB2 represents - addition of acid in the TB2

BTB2 represents - addition of base in the TB2

LXFIN represents - final effluent

LB1/LB2 represents - sludge from biological treatment

LFe represents - iron sludge of the phototreatment

LC represents - sludge of the coagulation tank

CPC represents - composit parabolic solar collector

TL represents - slurry tank

DES represents - dehydration unit

ESC represents - runoff from dehydration

MPH represents - pH meter

R represents - radiometer

LC+Fe represents - coagulation sludge + iron sludge

RFT' represents - tubular reactor of phototreatment

## Description of preferred embodiments

The present invention provides a solution for the treatment of effluents contaminated with recalcitrant and/or xenobiotics compounds, preferably leachate, comprising a step of advanced photocatalytic oxidation with artificial UV-Vis radiation or the combination of artificial and solar light. Surprising results were obtained in the photocatalytic production of strongly oxidizing and non-selective hydroxyl radicals combining sunlight / artificial light with an active catalyst (solar photo-Fenton reaction/UV-Vis).

In one embodiment of the method of treatment of recalcitrant and/or xenobiotics effluents described herein, may take place in a multi-stage logic, presenting a treatment strategy that combines the following sequence of procedures:

1) biological oxidation (TB1);

2) coagulation with ferric chloride in acid medium (TC) ;

3) photo-oxidation process through the photo-Fenton reaction with the use of solar radiation and/or artificial radiation (RFT);

4) biological oxidation with activated sludge (TB2);

5) treatment of sludge (TL), originated from the coagulation, iron sludge of the photo-Fenton process and biological sludge.

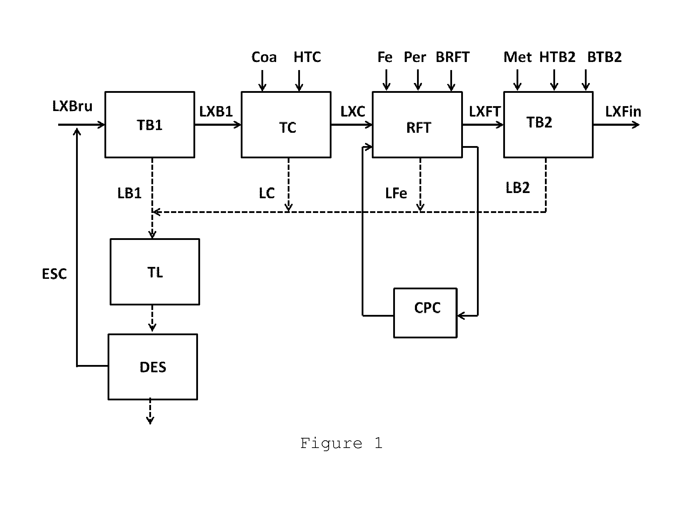

In a preferred embodiment described in Figure 1, the raw leachate (LXBru) enters the biological oxidation system (TB1).

TB1 can be a biological reactor of activated sludge, Sequencing Batch Reactor (SBR) or a lagoon with aeration / anoxic system incorporating a biomass of microorganisms that can metabolize biodegradable compounds in the effluent to be treated.

This step promotes the elimination of the biodegradable fraction of the organic matter and the removal of part of the nitrogen. Organic nitrogen is converted into the ammonia form, and through the processes of nitrification / denitrification, the nitrogen is eliminated. In this process the fraction of biodegradable carbon raw leachate is taken as a carbon source for the denitrification reaction.

The expected removal efficiencies for the various parameters are a function of the characteristics of input of the raw leachate. In general, most of the leachate has a high alkalinity.

The elimination of alkalinity during the initial biological oxidation (TB1) is essential, since it would lead to a high consumption of sulfuric acid required to acidify the leachate for the photo-Fenton reaction (optimum pH = 2.8-3.0) with a consequent increase in the concentration of sulphate. These, in turn, complex with ferric ions, decreasing the production of hydroxyl radicals, which have a higher oxidation potential to sulphate radicals, which would result in a decrease in the rate of photo-Fenton reaction and in an increased amount of UV radiation required to the phototreatment step. Thus, the buffer effect of the effluent is minimised if the ammoniacal nitrogene is completely eliminated during the biological oxidation process.

During the aerobic biological process the dissolved oxygen concentrations in the reactor are comprised between 0.5 and 2.0 mg $O_2$/L and the pH is between 6.5 and 8.5. At the end of this step the leachate may have a pH comprised between 6.5 and 7.5 and an alkalinity lower than 1g $CaCO_3$/L.

After the decanting cycle, the LXB1 effluent enters TC/TC', stirring begins and the coagulant is added, which may be, for example, ferric chloride at 40% with a treatment rate of 240 g of iron per 1 $m^3$ of leachate. Acid is then added, such as a commercial solution of sulfuric acid at 98% up to a pH of 4.2.

In order to acheive the better operation of these stages, the reactor of TC has system of mechanical agitation that promotes the mixture and the homogenization of the leachate with the reagents, which are injected via a dosing pump and a metering pump of the coagulant and a dosing pump of the acid. It also has a system for pH control.

In a preferred embodiment, after the addition and mixing of the reagents, the system is left at rest.The reactor of TC has a conical configuration to allow for a better separation of the produced sludge from the clarified liquid. From the upper portion of the TC the clarified liquid is extracted and this is fed to the RFT, the solid fraction deposited at the bottom of the tank, is conducted to the sludge tank (ST).The quantity of sludge produced in the coagulation corresponds to approximately 300 L/m$^3$ fed leachate.

The neutralization of the charges and the precipitation of ferric hydroxide ($Fe(OH)_{3)}$ results in a reduction in the concentration of suspended solids of 92% and a reduction of the organic load by approximately 61%, mainly due to the precipitation of humic acids, passing the effluent from a black/brown colour to a yellow/brown colour after a sedimentation time of 12 hours, which will significantly benefit the penetration of the radiation in the downstream step.

In embodiments of the present invention in the case of small flows, the RFT can be a device / reactor where the process of photo-oxidation, known as stage 3, takes place and combines the artificial radiation with solar radiation for the photo-Fenton reaction .This device can be equipped with the following equipment:

- iron lamps with spectrum in the UV-Vis region having a higher incidence in the UVA range, and respective quartz sleeves arranged evenly inside the reactor;
- system of mechanical agitation for mixing and homogenizing the effluent;
- pH control system;
- analyzer of hydrogen peroxide;
- dispensing device of the catalyst, which may be for example iron sulfate heptahydrate - $FeSO_4 .7H_2O$;
- pump of hydrogen peroxide, which can pump, for example, a 50% solution of hydrogen peroxide;
- pump of base, which may be for example 30% sodium hydroxide to adjust the pH;
- centrifugal recirculation pump for collectors, with the goal of obtaining a turbulent regime
- UV radiometer;
- composite parabolic solar collector (CPC).

The intensity of the ultraviolet radiation is measured by means of an overall UV-radiometer CUV4 mounted in the solar collectors CPC, with the same angle of inclination and provides these data in terms of $W_{UV}/m^2$ incident.

The equation 1 enables one to obtain the amount of UV energy accumulated ($Q_{UV,n}$, kJ / L) received on any surface in the same position relative to the sun, by unit of volume of water inside the reactor unit during the time interval $\Delta t$:

$$Q_{UV,n} = Q_{UV,n-1} + D t_n \overline{UV}_{G,n} \frac{A_r}{V_r}; \quad D t_n = t_n - t_{n-1} \qquad \text{Eq 1}$$

Where $t_n$ (expressed in s) is the time corresponding collection of the water sample n, $V_t$(L) time is the total volume of the reactor, $A_r(m^2)$ is the area of the illuminated surface of the collector and $\overline{UV}_{G,n}$ ($W/m^2$) is the mean solar ultraviolet radiation measured during the time interval $\Delta t_n$.

In relation to the amount of energy UV provided by the lamps, $Q_{UVLamp}$ (kJ / L) is given by Equation 2.

$$Q_{UVLamp} = N' P_{UVLamp}' t/Vt \qquad \text{Eq 2}$$

where N is the number of lamps, $P_{UVLamp}$ is the useful lamp power (kW), indicated by the supplier, t is the operating time of the lamp (expressed in s) and $V_t$ is the total volume of the reactor (L).

For this technology, which combines the two types of radiation, the total amount of UV energy is given by the sum of the two expressions above, i.e. by Equation 3.

$$Q_{UVtotal} = Q_{UV,n} + Q_{UVLamp} \qquad \text{Eq. 3}$$

The RFT presents a conical configuration, fairly steep, for a better separation of the iron sludge produced.

In other embodiments the LXC flow enters the RFT, commencing agitation and the catalyst is added so as to obtain an iron concentration of between 40 - 60 mg $Fe^{2+}$/L, for example 0.25 kg $FeSO_4 .7H_2O/m^3$. Then hydrogen peroxide is added in a concentration of up to 500 mg/L in order to minimize the consumption of hydrogen peroxide in parallel reactions.

After this initial phase, the bulbs are attached and the recirculation pump is activated, making the recirculation of the effluent by the CPC and the interior of the RFT, where the system of lamps is placed.

In other embodiments, the hydrogen peroxide can be added in a controlled manner so as to maintain a concentration between 100 and 500 mg/L, using for this purpose the analyzer in continuous, of hydrogen peroxide.

In other embodiments, the photo-Fenton reaction begins at a pH of 4.2, a value that decreases with the progress of the reaction. The optimum pH of the photo-Fenton reaction lies in the range between 2.8 - 3.0; the iron species $FeOH^{2+}$ is predominant. At this pH the production of hydroxyl radicals is maximised, and the precipitation of $Fe(OH)_3$ is prevented.

In a preferred embodiment, the reaction is initiated by the attack of the first hydroxyl radicals, formed from the reaction of the $Fe^{2+}$ ions with hydrogen peroxide added, to the fulvic acids, which represent different functional acid groups, leading to the formation of carboxylic acids of low molecular weight such as oxalic acid, which form soluble complexes with $Fe^{3+}$ with high photoactivity of up to 580 nm, being some of them photodegradable, allowing a rapid regeneration of ferric ions to ferrous ions, preventing the precipitation of ferric ions in the form of hydroxides and consequently the interruption of the reaction.

In this preliminary phase, the pH of the solution rapidly decreases to below 2.8 due to the formation of carboxylic acids resulting from the degradation of recalcitrant molecules, especially fulvic acids. Thus, it is necessary to correct the pH by the addition of commercial sodium hydroxide.

In preferred embodiments, the degradation of recalcitrant molecules also leads to the formation of hydroquinones and benzoquinones, which constitute an alternative and faster way of regeneration of ferric ions to ferrous ions, and subsequent reaction with hydrogen peroxide, resulting in the production of more hydroxyl radicals responsible for the degradation of the recalcitrant organic compounds in biodegradable compounds or the complete mineralization to carbon dioxide, water and mineral acids.

When putting the present invention into practice, it was noticed that the rate of the photo-Fenton reaction is drastically reduced in the presence of suspended solids which reduce the penetration of light in the reactional medium, as well as the loss of UV photons by absorption by solids. The presence of other species which absorb UV radiation decreases the amount of radiation available for the reaction, to be absorbed by the complex $Fe^{3+}$, in order to promote regeneration to $Fe^{2+}$ and the consequent formation of additional oxidizing species. Thus, the proper functioning of the upstream coagulation step is critical, allowing for the removal of suspended solids and of species filtering the UV radiation.

In other embodiments of the present invention from biodegradation tests, such as the Zahn-Wellens test, we have noticed that for the pre-photooxidized effluent can be treated biologically, efficiently meeting the discharge limits in the hydric environment (COD <150 mg $O_2$/L) at the end of the photo-Fenton reaction, the DOC concentration can be around 220-280 mg/L and the absorbance at 254 nm in a dilution of 1:25 must be lower than 0,08. These results were obtained after the consumption of 29 kg of hydrogen peroxide per kg of dissolved and oxidized organic carbon with a ratio equal to 11 kJ / L of energy in the phototreatment step.

In other embodiments of the present invention, when the goal is not to discharge in the hydric environment, but at the municipal collector (COD <1000 mg $O_2$/L), the conditions at the end of the photo-Fenton reaction, may be the following: the DOC concentration can be around 350 mg/L and the absorbance at 254 nm, in a dilution of 1:25, should be less than 0.3. Under these conditions about 76 mM $H_2O_2$ and 1.5 kJ/L in phototreatment power stage are required. In this case it shall not be necessary to use the step TB2 as this biological oxidation will occur in the municipal WWTP. The use of solar radiation allows a reduction in electricity between 30% and 60%, depending on the level of UV radiation.

In one embodiment, the temperature rise during the reaction, both because of the energy from the UV lamps and because of the solar radiation system, provides a significant increase in the reaction rate, and during the spring and summer months, with temperatures of the leachate of around 40° C, the phototreatment time is reduced between about 39% and 61% compared with a reaction carried out at 30° C and 20° C, respectively.

In one embodiment the reaction ends when the peroxide consumption reaches a preset value and its concentration in solution is less than 10 mg/L. At this time, the recirculation pump stops and the phototreated lecheate returns, by action of the gravity, to the RFT.

In one embodiment, once the photo-treatment is terminated, the effluent is neutralized to pH 7.0 by addition of a base that, as already mentioned, leads to the precipitation of iron as $Fe(OH)_3$ or as $Fe(OH)_2$.

In one embodiment, at the end of the settling time, starts the transfer of the neutralized phototreated leached (LXFT) of the RFT to the second biological treatment (TB2). The aim of this final biological treatment is to have a tuning system, for organic matter and for nitrogen, in order to comply with the discharge limits in hydric environment.

The TB2 comprises an aeration system, a system of stirring, supervision and correction of pH and control of dissolved oxygen and is prepared to operate under aerobic and anoxic conditions in an alternate manner, in order to promote the removal of nitrogen through reactions of nitrification and denitrification, respectively, and for removing biodegradable organic compounds formed at an upstream step (photo-treatment). Taking into account the low carbon/nitrogen ratio of the phototreated leachate, the TB2 is equipped with a dosing pump of methanol, which is injected as an external carbon source, with 2.4 g $CH_3OH$/g (N-$NO_3^-$+N-$NO_2^-$), so as to obtain the complete denitrification.

Through the history of testing, it was concluded that there are required between 15h to 24h of biological oxidation to degrade the remaining organic matter and to obtain an effluent with a COD lower than 150 mg $O_2$/L.

Finally the biological sludge are allowed to sediment for about 4 hours, and the final effluent (LXFin) is discharged. Regarding the treatment line of the solid fraction after the mixing of the various kinds of sludge in the TL, the current follows a single treatment.

The TL gathers the sludge from the coagulation step (LC), the sludge of iron of the phototreatment (FeLV), which are deposited at the RFT, and the excess sludge of the two biological treatments (LB1 and LB2). The geometric configuration of this organ is suitable so that, together with the mechanical agitation system that it possesses, is capable of promoting the efficient mixing of the sludge.

From the TL the sludge follow to the dewatering unit (DES). From this unit the dewatered sludge and run-offs leave, being the former conducted to an appropriate final destination, such as deposition in landfill, whereas the run-offs return to the entrance of the treatment, i.e., to the TB1.

## Preferred embodiment of the prefereed treatment system for flow rates above 20 m$^3$/day

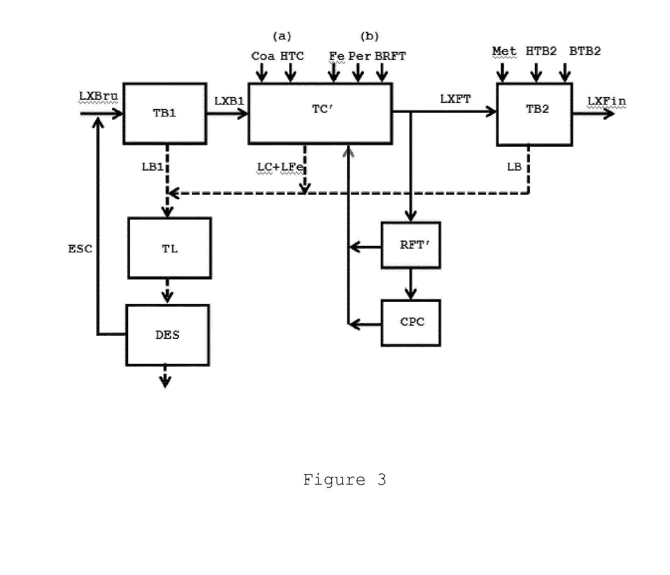

A strategy for the multi-stage treatment strategy for flows of more than 20 m$^3$/day, which combines the following sequence of procedures (Figure 3) is now presented:

1) biological oxidation (TB1);
2) coagulation with iron salts and in acid medium (for example by adding sulfuric acid (HTC)), followed by photo-Fenton process (TC'), using artificial light (RFT'), whether or not combined with solar radiation (CPC);
3) biological oxidation with activated sludge (TB2);
4) treatment of sludge (TL) derived from coagulation, iron sludge of the photo-Fenton process and biological sludge.

In a preferred embodiment described in Figure 3, the raw leachate (LXBru) enters the biological oxidation system (TB1).

TB1 as previously described.

The biological oxidation process may occur as described above.

In a preferred embodiment, after the decanting cycle, the LXB1 effluent enters the TC'. In embodiments of the present invention, at the TC' device a process of coagulation with ferric chloride in acid medium followed by the addition of reagents for photo-oxidation using artificial radiation, both combined or not with solar radiation, occurs for the photo-Fenton reaction.

In a preferred embodiment, the TC' can be equipped with the following equipment:

- mechanical agitation system that promotes the mixing and homogenization of the leachate with the reagents;
- coagulant dosing pump;
- acid dosing pump;
- pump of hydrogen peroxide, which can pump, for example, a 50% solution of hydrogen peroxide;
- base pump, which may be for example 30% sodium hydroxide to pH adjustment;
- recirculating pump for the radiation sources, with the goal of obtaining a turbulent regime;
- dispensing device of the catalyst, which may be for example iron sulfate heptahydrate - $FeSO_4.7H_2O$;
- pH control system;
- hydrogen peroxide analyzer;
- DOC control system;

The artificial radiation (RFT') can be provided by iron lamps with spectrum in the UV-Vis region, having a higher incidence in the UVA range, which are inserted in quartz sleeves horizontally arranged in tubular reactors. Preferably with the lamps described in table 2.

Solar radiation can be collected in solar collectors UV-Vis designed according to the NIO - *Non Imaging Optics* (CPC), technology, which in turn comprise:

- reflectors of high metallic reflectivity;
- cylindrical tubes of borosilicate glass, distributed in parallel on the reflecting surface allowing the illumination of the fluid flowing in the tube;
- UV radiometer for measuring the intensity of solar radiation.

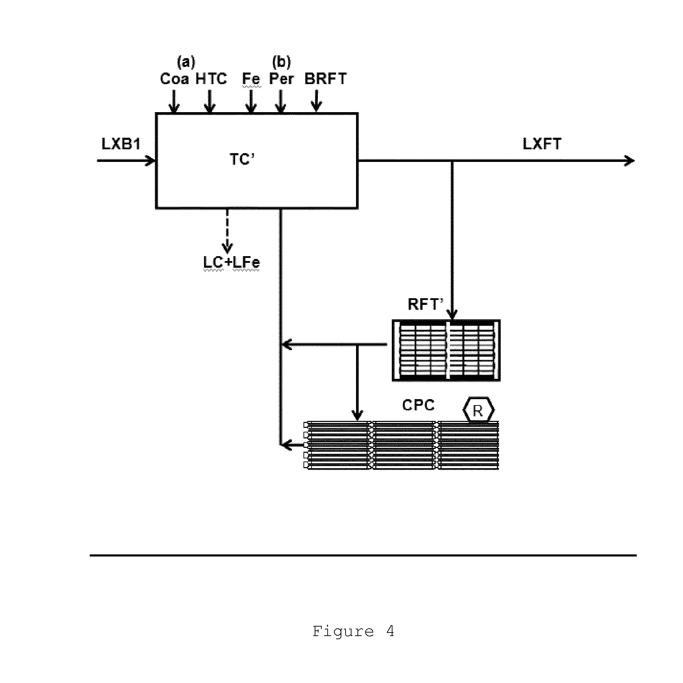

In one embodiment, as the entry of the effluent LXB1 in the TC' occurs, the agitation is started and the coagulant is injected, which may be for example 40% ferric chloride with a treatment rate of 240 g of iron per 1 m$^3$ of leachate. Acid is then added such as a commercial solution of 98% sulfuric acid up to a pH of 4.2 (reagents designated as (a) figure 4).

In one embodiment, after the addition and mixing of these reagents, the system is left at rest. The TC' device features a sharp conical configuration to enable a better separation of the sludge produced from the clarified liquid. Thus, from the bottom of the TC' are extracted the sludge deposited at the bottom of the tank and conducted to the slurry tank (TL). Similarly, it can be seen in TC, also in TC' the amount of sludge produced in coagulation corresponds to approximately 300 L/m$^3$ of leachate fed.

In one embodiment, the sludge having been removed, stirring is reset and to the clarified liquid, reagents designated in (b) are added (figure 4). Thus, the catalyst is added initially, in order to yield a concentration of 40-60 mg iron $Fe^{2+}$/L, for example 0.25 kg $FeSO_4.7H_2O$/m3. Then hydrogen peroxide is added in a concentration of up to 500 mg/L in order to minimize the consumption of hydrogen peroxide in parallel reactions.

In a preferred embodiment, after the reagent addition, the lamps are connected, placed inside the RFT', and the recirculation pump is turned on, making it recirculate the effluent to be treated by the RFT' and, if desired, also by the CPC.

In the same manner as described in the TC device, also in TC' the hydrogen peroxide can be added in a controlled manner so as to maintain a concentration between 100 and 500 mg/L, using for this purpose the analyzer, continuous, of hydrogen peroxide.

The photo-Fenton reaction in TC' develops itself in a similar manner to the described in TC.

Typically the phototreatment reaction ends when the following conditions are met: in the control system of the DOC the desired value can be viewed (220-280 mg/L); and the peroxide consumption reaches the preset value, and the solution concentration is less than 10 mg/L. At that moment there is the stopping of the recirculation pump and the phototreated leachate returns to the TC'.

After the phototreatment, the effluent may be neutralized to pH 7.0, preferably by the addition of a base that, as already mentioned, leads to the precipitation of iron as $Fe(OH)_3$ or $Fe(OH)_2$.

At the end of the settling time, the transfer of the phototreated neutralized leachate (LXFT) from the TC' to the second biological treatment (TB2) may be initiated.As previously mentioned, it is intended with this final biological treatment TB2 to have a tuning system, for organic matter and for nitrogen, in order to comply with the discharge limits in hydric environment.

The constitution of the system, the goals of the treatment and the conditions of operation of TB2 have been previously described.

Once this stage is concluded, the biologic sludge were allowed to sediment, for about 4 hours, and the final effluent (LXFin) is discharged.

The line of treatment of the solid fraction is identical to that shown in the treatment system for small flow rates.

Detailed description of the lamps

Unlike most cases relating to treatment of waste waters, in which mercury lamps are preferably used, whose spectrum is predominantly in the UVC range of 200 - 300nm for this purpose, in particular, and according to the preliminary tests carried out, it was surprisingly noted that the iron lamps were the ones that lead to the best results.

Thus, in this embodiment, to obtain a higher yield in the treatment of photo-Fenton of the leachates iron lamps were used in the composition of the filament, which still have a better result with a spectrum in the UV-Vis region, with a higher incidence between 300 and the 400nm, that is, in the UVA range, preferably the lamps specified in Table 2.

These lamps may be inserted inside a quartz sleeve which, in turn, shall be placed within a circular steel tube. The various lamps, each within its respective tube, constitute the reactor of phototreatment.

Detailed description of the phototreatment reactor

In a preferred embodiment the tubular reactor of the phototreatment step comprises tubes, preferably made of stainless steel, arranged horizontally, where each tube has in its interior, of concentric shape, a sleeve in quartz in which the lamp is inserted.

The principle of operation of this tubular reactor comprises the input of the leachate to be treated at one end, being evenly distributed by the various tubes, preferably of stainless steel. As the leachate traverses the interior of the tube, it will enter into contact with the radiation emitted by the lamp, being subsequently collected at the opposite end. The phototreated leachate from the different tubes can be stored in a common header pipe and is conveyed to the reagent addition tank (TC') for monitoring parameters and correcting dosages of reagents, after which it is recirculated back to the tubular reactor. The leachate to be phototreated repeats this circuit a plurality of times required until the effluent presents the desired analytical parameters.

**Examples of application**

Figure 1 illustrates the sequence of treatment. All mentioned organs work in batch system.

In the particular case of the identified leachate, this comes from a landfill operating since 1999. This raw leachate shows an intense black-brown coloration associated with a high concentration of humic substances (HS) (> 900 mg $C_{HS}$/ L), which corresponds to 39% and 13% of the dissolved organic carbon (DOC = 2300 mg C / L) and chemical oxygen demand (COD = 6900 mg $O_2$/L), respectively. It also presents a high nitrogen concentration (2200 mg N/L), mainly in the form of ammoniacal nitrogen (95%) and lower amounts of the $_{BOD5}$ / COD (0.18), ratio indicating that it is a hardly biodegradable effluent. According to the classification of leachates proposed by Chian and DeWalle (1976) in high pH (pH> 7.5) COD between 4000 and 10000 mg $O_2$/L, $BOD_5$/COD in the range of 0.1 - 0.3, age greater than 10 years and concentration of humic acids greater than 30% in terms of organic matter, this leachate may be rated between "intermediate" and "stabilized".

The raw leachate, whose characteristics are presented in Table 3, undergoes a biological oxidation at an aeration lagoon settlement followed by a SBR. The existence of aerobic and anoxic zones in the lagoon receiving the leachate enables the denitrification of 50% of the total nitrogen, without any addition of external carbon source being required. Thus, the biological reactor will promote the oxidation of reduced forms of nitrogen and consequently the elimination of the alkalinity of the effluent.

Throughout the biological oxidation system (lagoon + SBR), the fraction of biodegradable organic carbon has been almost completely removed (the $BOD_5$ reduced from 1300 mg $O_2$/L to 100 mg $O_2$/L, reaching a reduction of about 92%) yielding a final mineralization of about 40%. The remaining fraction of organic carbon may be considered as recalcitrant, mostly attributed to the presence of humic substances, which represent more than half of the dissolved organic carbon (DOC), about 57% at the end of the biological treatment. Regarding the initial concentration of humic substances there is a slight decrease, approximately 11%, which can be attributed to the adsorption of the activated sludge.

During the aerobic biological process in the SBR one has operated with concentrations of dissolved oxygen comprised between 0.5 and 2.0 mg $O_2$/L and the pH was between 6.5 and 8.5. Under these conditions, about 93% of the ammoniacal nitrogen is converted into nitrates and nitrites.

**Table 3** - Characteristics of the leachate during the treatment.

| Parameter | Units | LXBru | After insertion into the lagoon | LXB1 | LXC | LXFT | LXB2 |
|---|---|---|---|---|---|---|---|
| pH | Sörensen Scale | 8.1 | 7.5 | 6.8 | 4.2 | 6.9 | 7.9 |
| DOC | mg C / L | 2300 | 1400 | 1000 | 420 | 250 | 65 |
| COD | mg O2/L | 6900 | 4200 | 3500 | 1100 | 480 | 145 |
| BOD $_5$ | mg O2/L | 1250 | 500 | 100 | - | - | 20 |
| Alkalinity | g CaCO $_3$ / L | 5.4 | 5.0 | 0.2 | 0.03 | 0.05 | 2.6 |
| TSS | mg / L | 125 | 400 | 350 | 125 | 65 | 45 |
| Total N | mg / L | 2200 | 1100 | 1100 | 1000 | 1000 | 9 |
| N-NH$_4^+$ | mg / L | 2100 | 1050 | 70 | 30 | 40 | <1 |
| N-NO$_3^-$ | mg / L | <2 | <2 | 20 | 90 | 950 | <2 |
| N-NO$_2^-$ | mg / L | 75 | 40 | 1000 | 880 | <1 | <1 |
| Sulphates | mg / L | 500 | 500 | 500 | 1000 | 1000 | 1000 |
| Total P | mg / L | 15 | 10 | 8 | - | 1 | <1 |

For an average temperature of 25° C, the nitrification rate obtained was 8.2 mg N-NH$_4^+$ / h / g VSS, consuming about 4.9 kg $_{CaCO3}$ per kg N-NH $_4$ $^+$·At the end of this step the leachate has a pH of 6.8 and an alkalinity of 0.2 g CaCO$_3$ / l.

Upon the termination of this first biological stage, there was obtained a LXB1 current with a DOC of 1000 mg/L and an ammoniacal nitrogen content of 70 mg N/L. At the TB1 there was a removal of 40% of biodegradable carbon and a 50% reduction in the amount of total nitrogen.

The current LXB1 enters the tank TC and, being the agitation initiated. In the coagulation step 1.3 L of commercial solution of 40% FeCl$_3$ and 0.24 L of 98% H$_2$SO$_4$ per m$^3$ of leachate fed are added. After 1 h, the stirring is concluded and the produced sludge is allowed to sediment for 12 hour (LC), being the volume of the same comprised between

250-300 L/m$^3$. At the end of this step, the LXC current has a pH of 4.2 a DOC of 420 mg / L (equivalent to a 58% reduction) and total suspended solids concentration equal to 125 mg / L.

LXC enters the RFT tank and a photo-Fenton reaction is initiated. In this step are added ferrous sulphate (Fe current) at a rate of 0.25 kg / m$^3$ and 6.6 L of $H_2O_2$ at 50% per m$^3$ gradually added to maintain the concentration between 100 and 500 mg / L inside the reactor, under mechanical stirring.

The step of phototreatment ends after 5 hours. The photo-Fenton reaction was carried out by combining solar radiation with a radiation intensity mean of 17 W/m$^{2'}$ with artificial radiation provided by two iron lamps whose individual nominal power is 1200 W.

At the end a DOC of 250 mg/L was obtained, a total of 9 kJ/L of UV energy being necessary, this resulted in a power consumption equal to 7 kWh/m$^3$ and a peroxide consumption equal to 115 mM, of which 65% was rapidly consumed at the beginning of the reaction, where a decrease in pH occurred, being therefore necessary to add 0.5 L of sodium hydroxide per m$^{3.}$

The neutralization step follows, and in this one about 0.9 L of 30% sodium hydroxide per m$^3$ of leachate are consumed. Then, the stirring is turned off and a process of sedimentation of 3 hours follows, for further removal of iron sludge (approximately 60 L/m$^3$).

The LXFT enters the second biological treatment (TB2) whose characterization is shown in Table 3.

The upstream step allowed the increase in the biodegradability of the leachate, which now has about 75% of biodegradable carbon. Given this result, the TB2 started with a step of denitrification, with 2.4 mg of methanol added and 1.2 mg of acid per 1 mg of nitrogen (N-$NO_3^-$+N-$NO_2^-$) to remove. The rate of denitrification obtained was 5.8 mg (N-$NO_3^-$+N-$NO_2^-$ )/h/g VSS.

During the final biological treatment, the concentration of total suspended solids and volatiles present in the reactor was 2300 mg / L and 1600 mg / L, respectively, representing a fraction of 70% volatiles.

After denitrification, there was an aerobic cycle to remove the remaining carbon, stage that lasted for approximately 20 hours.

Upon completion of these cycles, the stirring is switched off and the system is left to stand for 4 hours. The final effluent LXFin, whose characteristics are listed in 3, is discharged, meeting the discharge limits in hydric environment.

**Comparison of process efficiencies (time / amounts of reagents / effluent quality) with and without coagulation for some preferred embodiments**

a) Without initial biological treatment and without coagulation

In the experiments conducted without the initial biological oxidation step and without the coagulation step, i.e. without the addition of ferric chloride was found that the amount of peroxide consumed was about 275 mM and the amount of radiation used was around 104 kJ/L, this reaction taking place at about 43h.

The final phototreated effluent presented a DOC of about 427 mg / 1.

b) With the initial biological treatment and without coagulation

In the trials performed with initial biological oxidation and without the coagulation step, it was found that the amount of peroxide consumed was close to 220 mM, the amount of radiation used was about 50 kJ/L and the time the phototreatment step has taken was around 15h.

c) With the initial biological treatment and with coagulation The experiments where there was a biological oxidation and coagulation step, upstream of the phototreatment yielded the following values: hydrogen peroxide consumption was around 120mM, the amount of radiation was around 18kJ / L and the time of phototreatment was about 5 to 7h.

In tests performed in which no coagulation step, there was a decrease in the reaction efficiency of the phototreatment, since the solids that would precipitate during this step precipitate during the phototreatment and reduce the efficiency of the penetration of the radiation. In this case the phototreated effluent presented a DOC of around 430 mg/l, while with the coagulation, the DOC of the phototreated effluent is around 250 mg/l.

It should be noted, for the downstream step, the final biological oxidation, it was observed in previous studies that have been carried out, that for obtaining a final effluent that meets the legal requirements, that is, whose COD <150 mg/l, the effluent at the outlet of the phototreatment should have a DOC of no more than 250 mg/l.

It is noted that in the tests performed without coagulation the desired value for DOC has not even been reached, i.e., the 250 mg/l, even using an excessive consumption of hydrogen peroxide (as mentioned above, in the order of 220 mM), a value that is twice the required in the tests performed with coagulation and with a power consumption that is almost the triple.

The following table summarizes the main findings above:

| | No initial biological treatment | With initial biological treatment | |
|---|---|---|---|
| | No coagulation | No coagulation | With coagulation |
| Amount of peroxide consumed (mM) | 275 | 220 | 120 |
| Amount of radiation required (kJ / L) | 104 | 50 | 18 |
| Phototreatment time (h) | 43 | 15 | 5 to 7 |
| Quality of phototreated effluent (in terms of mg / L DOC) | 427 | 430 | 250 |

**Comparison of values with both light sources and with each one individually**

Given the tests performed, we can almost say that, regardless of the type of radiation used, whether it be solar radiation or artificial radiation, in terms of analytical results that are obtained there are no significant differences to report between both processes. So whether it is a photo-Fenton with solar radiation or with artificial radiation (using iron lamps in accordance with table 2) the results are the same. In cases where one uses the solar radiation combined with artificial radiation, one must consider a decrease in electricity consumption. This decrease is between 30% and 60%. The present invention is not, naturally, in any way restricted to the embodiments described herein and a person with ordinary skill in the art can devise many possibilities for modifying the same as defined in the claims.

The preferred embodiments described above are combinable. The following dependent claims define, aditionally, preferred embodiments of the present invention.

**Claims**

1. Method for the treatment of effluents with recalcitrant and/or xenobiotic compounds comprising the following sequential steps:

   - subjecting the effluent to a first biological oxidation treatment in particular to remove biodegradable material, alkalinity and reduced forms of nitrogen;
   - coagulate the resulting effluent with a coagulant with iron salts and separate the clarified liquid;
   - subjecting the clarified liquid to a photo-oxidation by the photo-Fenton reaction with the use of UV / VIS radiation in the presence of hydroxyl radicals, in which the source of UV / VIS radiation is artificial light or a combination of sunlight and artificial light.

2. Method according to the preceding claim wherein the artificial radiation source comprises lamps particularly iron lamps, with an incidence between 300 - 400nm.

3. Method according to the preceding claim further comprising the step of subjecting the effluent resulting from the photooxidation to a second biological oxidation treatment.

4. Method according to the preceding claims, wherein the hydrogen peroxide is added as a source of hydroxyl radicals.

5. Method according to the preceding claims, further comprising adding a photo-oxidation catalyst, preferably ferrous sulfate heptahydrate.

6. Method according to the preceding claims, wherein the effluent is landfill leachate.

7. Tubular reactor for the phototreatment of effluents according to the method described in the preceding claims comprising at least one horizontally arranged tube for the passage of the effluent to be treated, wherein each tube comprises, internally, a quartz sleeve that houses a lamp containing iron.

8. Reactor for the phototreatment of effluents according to the method described in claims 1-6 comprising the following elements:

- container for the treatment of the effluent to be treated with input and output stirring ;
- lamps containing iron, with spectrum in the UV-Vis region preferably with higher incidence in the UVA range, and respective quartz sleeves arranged evenly inside the reactor;
- mixing system.

9. Reactor according to claim 7 - 8 further comprising a composite parabolic solar collector coupled thereto comprising:

- metallic reflectors;
- cylindrical borosilicate glass tubes distributed in parallel under the reflective surface, allowing the lighting of the fluid that circulates in the tube, and
- a recirculation pump that ensures a turbulent regime.

10. Reactor according to the preceding claim in which the collector captures solar radiation in the range 300-560nm.

11. Reactor according to claims 9-13 further comprising systems of addition of reagents and/or systems for monitoring the photo-Fenton reaction, in particular: pH control system, control system of hydrogen peroxide, catalyst dosing device, dosing pumps for reagents, radiometer, DOC meter.

12. Treatment plant for effluents with recalcitrant and/or xenobiotic compounds by the method described in the preceding claims **characterised in that** it comprises, sequentially connected:

- device for biologic oxidation of the effluent;
- device for the coagulation of the effluent with an adding device of a coagulant with iron salts;
- reactor of photo-oxidation of the photo-Fenton reaction with UV/VIS radiation artificial emitter, or artificial and solar, described in claims 9-11, in particular with iron lamps.

Figure 1

Figure 2

Figure 3

Figure 4

EP 2 784 031 A1

# EUROPEAN SEARCH REPORT

Europäisches Patentamt
European Patent Office
Office européen des brevets

Application Number
EP 14 16 1588

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Van Aken, P: "Recalcitrance removal of pretreated landfill leachate by ozone-based oxidation processes", , May 2012 (2012-05), XP002727078, Retrieved from the Internet: URL:http://lirias.lessius.eu/bitstream/123 456789/5242/1/Conference%20article%20EMChI E%20Mechelen%202010.pdf [retrieved on 2014-07-09] * abstract; figure 1 * * paragraphs [0001], [02.2], [03.2] * ----- | 1-12 | INV. C02F9/00 C02F1/32 C02F1/72 C02F9/14 |
| Y | ROCHA E M R ET AL: "Landfill leachate treatment by solar-driven AOPs", SOLAR ENERGY, vol. 85, no. 1, 1 January 2011 (2011-01-01), pages 46-56, XP027571576, PERGAMON PRESS. OXFORD, GB ISSN: 0038-092X [retrieved on 2010-12-22] * paragraphs [02.1], [02.3], [03.1], [03.3] * ----- | 1-6 | |
| Y | JP H09 174096 A (EBARA CORP) 8 July 1997 (1997-07-08) * paragraphs [[007]], [[008]]; figure * ----- | 1-6 | |
| Y | JP 2002 304971 A (HARISON TOSHIBA LIGHTING CORP) 18 October 2002 (2002-10-18) * paragraph [[0002]] * ----- -/-- | 7-12 | |

TECHNICAL FIELDS
SEARCHED      (IPC)

C02F

The present search report has been drawn up for all claims

| Place of search | Date of completion of the search | Examiner |
|---|---|---|
| The Hague | 14 July 2014 | González Arias, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | R. BAUER: "THE PHOTO-FENTON OXIDATION- A CHEAP AND EFFICIENT WASTEWATER TREATMENT METHOD", RESEARCH OF CHEMICAL INTERMEDIATES, vol. 23, no. 4, 1997, pages 341-354, XP002727079, AMSTERDAM ISSN: 0922-6168 * page 351 * | 1-6,12 | |
| A | CASSANO D ET AL: "Comparison of several combined/integrated biological-AOPs setups for the treatment of municipal landfill leachate: Minimization of operating costs and effluent toxicity", CHEMICAL ENGINEERING JOURNAL, vol. 172, no. 1, 25 May 2011 (2011-05-25), pages 250-257, XP028254516, ELSEVIER SEQUOIA, LAUSANNE, CH ISSN: 1385-8947, DOI: 10.1016/J.CEJ.2011.05.098 [retrieved on 2011-06-01] * abstract * * paragraph [0001] - paragraph [02.4] * | 1-6 | |
| A | SHU H Y ET AL: "Treatment of MSW landfill leachate by a thin gap annular UV/H2O2 photoreactor with multi-UV lamps", JOURNAL OF HAZARDOUS MATERIALS, vol. 129, no. 1-3, 28 February 2006 (2006-02-28), pages 73-79, XP027884929, ELSEVIER, AMSTERDAM, NL ISSN: 0304-3894 [retrieved on 2006-02-28] * abstract; figure 1 * | 7-11 | TECHNICAL FIELDS SEARCHED (IPC) |

-/--

The present search report has been drawn up for all claims

| Place of search | Date of completion of the search | Examiner |
|---|---|---|
| The Hague | 14 July 2014 | González Arias, M |

EPO FORM 1503 03.82 (P04C01)

Europäisches
Patentamt

European
Patent Office

Office européen
des brevets

# EUROPEAN SEARCH REPORT

Application Number

EP 14 16 1588

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | VITOR J P VILAR ET AL: "Treatment of a sanitary landfill leachate using combined solar photo-Fenton and biological immobilized biomass reactor at a pilot scale", WATER RESEARCH, vol. 45, no. 8, 14 February 2011 (2011-02-14), pages 2647-2658, XP028161273, ELSEVIER, AMSTERDAM, NL ISSN: 0043-1354, DOI: 10.1016/J.WATRES.2011.02.019 [retrieved on 2011-02-22] * the whole document * | 1-12 | |
| A | DENG Y ET AL: "Treatment of landfill leachate by the Fenton process", WATER RESEARCH, vol. 40, no. 20, 1 December 2006 (2006-12-01), pages 3683-3694, XP027902096, ELSEVIER, AMSTERDAM, NL ISSN: 0043-1354 [retrieved on 2006-12-01] * the whole document * | 1-12 | |
| A | J.GARCIA-MONTAÑO: "ENVIRONMENTAL ASSESSMENT OF DIFFERENT PHOTO-FENTON APPROACHES FOR COMMERCIAL RACTIVE DYE REMOVAL", JOURNAL OF HAZARDOUS MATERIALS, vol. 38, 2006, pages 218-225, XP002727080, Elsevier ISSN: 0304-3894 * the whole document * * paragraphs [0001] - [02.4], [0004] * | 1-12 | TECHNICAL FIELDS SEARCHED (IPC) |

The present search report has been drawn up for all claims

| Place of search | Date of completion of the search | Examiner |
|---|---|---|
| The Hague | 14 July 2014 | González Arias, M |

EPO FORM 1503 03.82 (P04C01)

**ANNEX TO THE EUROPEAN SEARCH REPORT
ON EUROPEAN PATENT APPLICATION NO.**

EP 14 16 1588

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2014

| Patent document cited in search report | | Publication date | Patent family member(s) | | Publication date |
|---|---|---|---|---|---|
| JP H09174096 | A | 08-07-1997 | JP | 3420869 B2 | 30-06-2003 |
| | | | JP | H09174096 A | 08-07-1997 |
| JP 2002304971 | A | 18-10-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 20121103824
- CN 20121098469
- WO 2001028932 A
- CN 20121128804